# EUROPEAN PATENT SPECIFICATION

(11) **EP 3 589 379 B1**
(45) Date of publication and mention of the grant of the patent: **20.05.2026**
(21) Application number: 18760711.4
(22) Date of filing: 09.02.2018
(51) Int. Cl.: A63C 11/22

(54) **SKI POLE**
SKISTOCK
BÂTON DE SKI

(30) Priority: 02.03.2017 NO 20170311
(43) Date of publication of application: 08.01.2020
(73) Proprietor: ELITE TITAN AS, 3617 Kongsberg (NO)
(72) Inventor: NYSÆTHER, Heine Liland, 3617 Kongsberg (NO); SKALSTAD, Roar, 3617 Kongsberg (NO)
(74) Representative: Deans, Michael John Percy
(86) International application number: PCT/NO2018/050037
(87) International publication number: WO 2018/160069

(56) References cited:
- JP-A- H07 155 421
- KR-U- 20090 005 221
- US-A- 5 139 283
- US-A- 5 320 386
- US-A- 5 320 386
- US-A- 5 485 948
- US-A- 5 665 441
- US-A1- 2005 196 570
- US-A1- 2005 196 570
- US-A1- 2008 088 112
- US-S- D 426 277
- HARRIS J A ET AL: "Impact response of additively manufactured metallic hybrid lattice materials", INTERNATIONAL JOURNAL OF IMPACT ENGINEERING, PERGAMON, GB, vol. 104, 21 February 2017 (2017-02-21), pages 177 - 191, XP029956462, ISSN: 0734-743X, DOI: 10.1016/J.IJIMPENG.2017.02.007

## Description

The present invention relates to a ski pole.

Ski poles need to be light and have a high resistance against breaking. Traditional ski poles were made of bamboo but modern ski poles are now mostly made in a composite material, especially in the more expensive segment. These are constructed so as to have its highest strength in the longitudinal direction. But the nature of carbon fibres makes them vulnerable to breaking when they are exposed to lateral forces. Ski poles have also been made from aluminium which is a light material but are more prone to bending.

Using a metal increases resistance against breakage as compared to carbon fibres. But to achieve an optimal weight it is important to use as little material as possible.

Titanium is a material that has high strength but low density. It has for example 60 % higher density than aluminium and twice the strength. Titanium also exhibits high resistance against breaking.

US Patent No. 5 320 386 discloses a ski pole made of titanium with an additional material to increase its stiffness.

US Patent 5139283 Dow et al. discloses an adjustable and foldable ski pole with two pole sections hinged together and made of solid metal such as an aluminium, magnesium or titanium alloy.

US Patent 5665441 Suzue et al. discloses hollow cylindrical members suitable for use in golf club shafts, fishing rods, bicycle frames or ski stock, in which a metal such as titanium, which may take the form of a metal mesh, is embedded into the resin material of the hollow cylindrical member.

A learned Article entitled "Impact response of additively manufactured metallic hybrid lattice materials" by Harris J. A. et al., published by Pergamon in "International Journal of Impact Engineering", Vol 104, pp 177-191, 21 February 2017, is a study of deformation in honeycomb and like volumetric block structures in three-dimensional blocks. There is no suggestion that the study by Harris et al has any significance for or relevance to structures in the form of elongate poles such as ski-poles. The cross-sectional dimensions are very much less than the elongate dimensions in the length, for example, of ski poles. Harris et al are, instead, concerned (see, particularly, Fig. 8) with gross deformations within three dimensional blocks of honeycomb and similar structures.The present invention has arisen from seeking to provide a ski pole that is as light as the present ski poles but is more resistant against breaking or buckling. This is achieved in an elongate ski pole by making at least a part of the pole as a lattice or grid in titanium.

In accordance with the present invention, there is provided a ski pole which includes a portion of the length of the pole substantially greater than its extent cross-sectionally of the pole, which portion includes a load-bearing hollow see-through length of the pole formed of titanium and formed solely as a hollow lattice or grid allowing sight and free passage of air and water through the said portion of pole.

Preferably the length of the titanium part is between a third and a half of the length of the pole. Experience has shown that it is the lower part of the pole that is mostly in danger of breaking or buckling, either because of the high strain or because they get tangled in a competitor's pole. Titanium is however a very expensive material and it is therefore preferable to use titanium only in the parts of the pole most prone to strain.

When the pole is not totally made in titanium it can be connected to the other part of the pole by glue or the other part can be threaded into the titanium part.

In one aspect of the invention the titanium part is cast.

In one possibility, the titanium part is produced using 3D printing.

The invention will now be described in more detail, referring to the enclosed drawings where
Fig. 1 shows a ski pole according to the invention, and
Fig. 2 shows the detail of the titanium part.

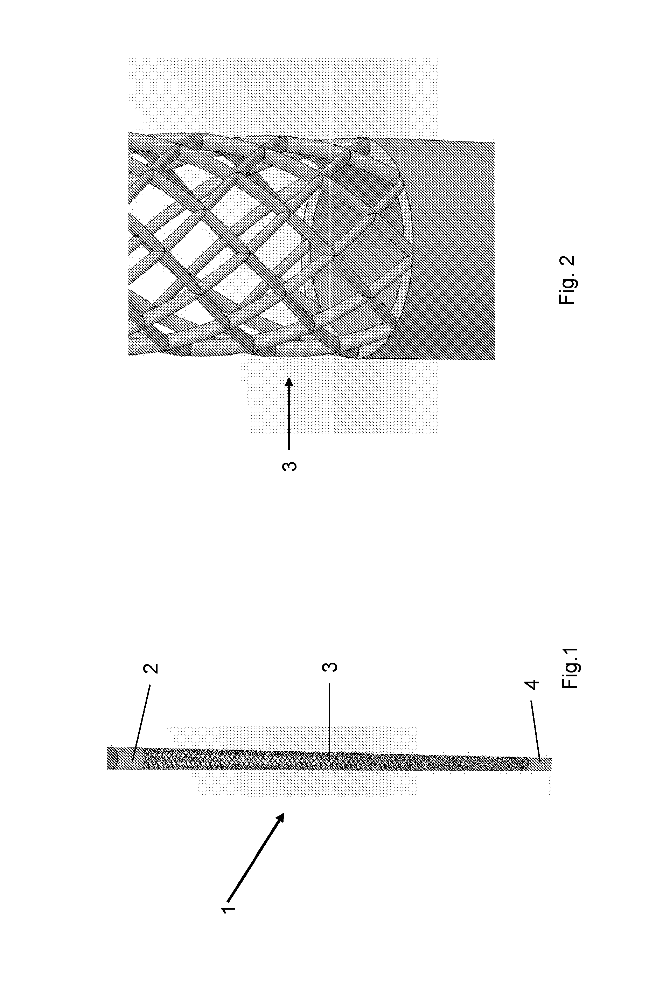

In fig. 1 there is shown a ski pole 1 comprising an upper part 2, a middle part 3 and a lower part 4. The middle part 3 is made of titanium and is formed as a lattice or grid as shown in fig. 2. This enables good properties as regards to withstanding forces in three dimensions, especially when material weight is an important factor. As shown the titanium part is right circular cylindrical in form but can also have other cylindrical forms, for example hexagonal or octagonal in section.

The upper part of the pole may be a conventional material such as carbon fibres or aluminium. The part 2 is shaped so that it can fit with the titanium part 3 (not shown). A lower segment of the upper part can for example be cylindrical and with a diameter that enables it to fit into the titanium part 3 using glue or press fit. Other alternative attachment method known to those skilled in the art may also be used.

Suitably, the titanium part makes up between a third and a half of the length of the pole. The titanium part suitably is attached by glue. The pole may be made by 3D printing or by casting.

As is self-evident from the drawings, being a pole, the length of the pole is very much greater than its dimension across its cross-section. The titanium part of the pole is self-evidently hollow and see-through, and thus allows sight and free access to air and water. The lower part 4 is shaped with a point or similar to enable a good contact with the snow, as is well known in the art. The upper segment of the lower part 4 may, as for the upper segment, be cylindrical and in the same way pushed into or glued to the titanium part.

The titanium part may be manufactured using casting or 3D printing. It is of special note that the part is designed to be as resistant to buckling as possible.

## Claims

1. A ski pole which includes a portion (3) of length of the pole (1) with an extent of length substantially greater than its extent cross-sectionally of the pole (1), which portion includes a load-bearing hollow see-through length (3) of the pole formed of titanium and formed solely as a hollow lattice or grid allowing sight and free passage of air and water through the said portion (3) of pole.

2. A ski pole according to Claim 1, further **characterized in that** the titanium part (3) makes up between a third and the half of the length of the pole.

3. A ski pole according to Claims 1 or 2, further **characterized in that** part or parts of the pole are made of a material other than titanium and **in that** the titanium part (3) is attached to this or these parts using a press fit.

4. A ski pole according to Claims 1 or 2, further **characterized in that** the titanium part (3) is attached with glue.

5. A ski pole according to claim 1 or 2, further **characterized in that** the pole is made by 3D printing.

6. A ski pole according to any of Claims 1 or 2 further **characterized in that** the pole is made by casting.

## Patentansprüche

1. Skistock (1) aus Titan, zumindest teilweise seiner Länge nach, **dadurch gekennzeichnet, dass** der Titanteil (3) als Gitter ausgebildet ist.

2. Skistock nach Anspruch 1, **dadurch gekennzeichnet, dass** der Titanteil (3) zwischen einem Drittel und der Hälfte der Länge des Stocks ausmacht.

3. Skistock nach Anspruch 1 oder 2, **dadurch gekennzeichnet, dass** Teile des Stocks aus einem anderen Material gefertigt sind und dass der Titanteil mittels Presspassung daran befestigt ist.

4. Skistock nach Anspruch 1 oder 2, **dadurch gekennzeichnet, dass** der Titanteil mit Klebstoff befestigt ist.

5. Skistock nach Anspruch 1 oder 2, **dadurch gekennzeichnet, dass** der Stock im 3D-Druckverfahren hergestellt ist

6. Skistock nach Anspruch 1 oder 2, **dadurch gekennzeichnet, dass** der Stock durch Gießen hergestellt ist.

## Revendications

1. Bâton de ski (1) en titane sur au moins une partie de sa longueur, **caractérisé en ce que** la partie en titane (3) est formée sous forme de treillis ou de grille.

2. Bâton de ski selon la revendication 1, **caractérisé en ce que** la partie en titane (3) représente entre un tiers et la moitié de la longueur du bâton.

3. Bâton de ski selon la revendication 1 ou2, **caractérisé en ce que** certaines parties du bâton sont faites d'un autre matériau et que la partie en titane est fixée à celle-ci par un ajustement serré.

4. Bâton de ski selon la revendication 1 ou 2, **caractérisé en ce que** la partie en titane est fixée avec de la colle.

5. Bâton de ski selon la revendication 1 ou 2, **caractérisé en ce que** le bâton est fabriqué par impression 3D

6. Bâton de ski selon la revendication 1 ou 2, **caractérisé en ce que** le bâton est fabriqué par moulage.
